# FASCICULE DE BREVET EUROPEEN

(11) **EP 3 281 677 B1**
(45) Date de publication et mention de la délivrance du brevet: **18.05.2022**
(21) Numéro de dépôt: 17179884.6
(22) Date de dépôt: 05.07.2017
(51) Int. Cl.: A62C 3/08, A62C 99/00, A62C 3/06

(54) **PROCEDE DE COMMANDE D'UN SYSTEME D'INERTAGE D'UN RESERVOIR DE CARBURANT, ET SYSTEME D'INERTAGE POUR LA MISE EN OEUVRE DU PROCEDE**
VERFAHREN ZUR STEUERUNG EINES INERTISIERUNGSSYSTEMS EINES KRAFTSTOFFTANKS, UND INERTISIERUNGSSYSTEM FÜR DIE UMSETZUNG DIESES VERFAHRENS
METHOD FOR CONTROLLING A SYSTEM FOR INERTING A FUEL TANK, AND INERTING SYSTEM FOR CARRYING OUT THE METHOD

(30) Priorité: 12.08.2016 FR 1657758
(43) Date de publication de la demande: 14.02.2018
(73) Titulaire: SAFRAN AEROTECHNICS, 78370 Plaisir (FR)
(72) Inventeur: VANDROUX, Olivier, 38100 Grenoble (FR); MISSOU, Jérémie, 42000 Saint-Étienne (FR)
(74) Mandataire: Delprat, Olivier

(56) Documents cités:
- EP-A1- 3 037 353
- FR-A1- 3 012 421
- US-A1- 2006 021 652
- US-B1- 8 801 831

## Description

### DOMAINE TECHNIQUE

La présente invention concerne un procédé de commande d'un système d'inertage d'un réservoir de carburant d'un aéronef, tel qu'un avion, un hélicoptère ou analogue, ainsi qu'un système d'inertage pour la mise en œuvre dudit procédé.

### ART ANTERIEUR

Dans le domaine de l'aéronautique, il est connu des systèmes d'inertage pour générer un gaz d'inertage, tel que de l'azote, ou tout autre gaz neutre tel que le dioxyde de carbone par exemple, et pour introduire ledit gaz d'inertage dans les réservoirs de carburant pour des raisons de sécurité afin de réduire le risque d'explosion desdits réservoirs.

Un système classique d'inertage de l'art antérieur comporte, d'une manière générale, un générateur de gaz d'inertage embarqué dit OBIGGS, selon l'acronyme anglo-saxon « On Board Inert Gas Generating Systems », alimenté en air comprimé, par exemple avec de l'air comprimé détourné d'au moins un moteur à partir d'un étage dit de pression intermédiaire et/ou d'un étage dit de haute pression en fonction d'une situation de vol. On notera que l'utilisation d'air comprimé provenant d'un moteur est avantageuse car sa pression et sa température sont relativement élevées, de sorte que l'air peut être ajusté sur une large gamme de pressions et de températures désirées. Le système OBIGGS est couplé au réservoir de carburant de l'avion, et sépare l'oxygène de l'air.

Le système OBIGGS comprend au moins un module de séparation d'air contenant, par exemple, des membranes perméables, telles que des membranes en polymère, traversées par un flux d'air. En raison des différentes perméabilités de la membrane à l'azote et à l'oxygène, le système divise le flux d'air de telle sorte qu'un flux d'air à forte teneur en azote et un flux d'air à forte teneur en oxygène, sont obtenus. La fraction d'air enrichie en azote, considérée comme le gaz d'inertage, est acheminée dans les réservoirs de carburant de telle sorte que le taux d'oxygène présent dans le volume libre du réservoir est diminué. Les dispositifs nécessaires à cette opération, tels que des compresseurs, des filtres, des modules de refroidissement à air ou à eaux, et analogues, sont intégrés dans l'installation de gaz d'inertage.

Lorsque le taux d'oxygène présent dans la partie vide du réservoir est inférieur à la limite d'inflammation définie conformément aux exigences de la FAA selon l'acronyme anglo-saxon « Federal Aviation Administration » détaillées dans le document AC25.981-2A en date du 19 septembre 2008 et intitulé « FUEL TANK FLAMMABILITY REDUCTION MEANS » et ses annexes, les risques d'inflammation et de déflagration sont très limités, voire nuls. De ce qui précède, rendre inerte un réservoir de carburant consiste à injecter du gaz d'inertage dans le réservoir pour maintenir le taux d'oxygène présent dans ledit réservoir sous un certain seuil, par exemple 12%.

Le système d'inertage est donc réalisé suivant des règles de dimensionnement dictées par le document AC25.981-2A. Le débit de gaz d'inertage à injecter est ainsi déterminé, à intervalles réguliers, en fonction de valeurs de paramètres d'un profil de mission type certifié. Le profil de mission type certifié correspond au profil de mission réalisé le plus fréquemment par l'aéronef. Ces paramètres peuvent être constitués, par exemple, par un volume libre du réservoir de carburant, ou bien par le taux de descente et/ou de montée et/ou l'altitude de l'aéronef. Le profil de mission type certifié préconise, pour des valeurs de paramètres à un instant donné, l'injection d'un certain débit de gaz d'inertage pour satisfaire à la réglementation en vigueur.

Cependant, le profil de mission type certifié prévoit, entre autres, que l'aéronef, lors de sa mission, effectue une descente avec un taux de 2500 pieds par minute jusqu'à une altitude de 4000 pieds, et que l'aéronef embarque une quantité de carburant dans ses réservoirs suffisante pour qu'il atterrisse avec une quantité de carburant minimum prédéterminée. Le profil de mission type certifié comprend des paramètres généralement plus contraignants que ceux observés en réalité lors d'une mission réelle de l'aéronef.

Il s'ensuit que le système d'inertage de l'état de la technique est généralement surdimensionné par rapport au besoin réel en gaz d'inertage d'un vol standard, et génère et injecte un débit de gaz d'inertage plus important que nécessaire, entrainant indirectement une surconsommation de carburant pour l'aéronef, et des coûts de fonctionnement élevés.

EP3037353 A1décrit un système d'inertage qui adapte le débit de gaz inerte en fonction de divers paramètres en temps réel et le modifie si l'un d'eux franchit ses seuils respectifs prédéterminés.

### EXPOSE DE L'INVENTION

L'un des buts de l'invention est donc de remédier à ces inconvénients en proposant un procédé de commande d'un système d'inertage d'un réservoir de carburant d'un aéronef, permettant d'adapter la distribution de gaz d'inertage au besoin réel, afin de réduire indirectement la consommation de carburant, et les coûts liés au fonctionnement du système d'inertage.

A cet effet et conformément à l'invention, il est proposé un procédé de commande d'un système d'inertage conçu pour injecter, lors d'une mission réelle d'un aéronef, un débit de gaz d'inertage dans au moins un réservoir de carburant dudit aéronef.

Selon l'invention, le procédé de commande consiste à réaliser les étapes consistant à :
- déterminer une valeur d'au moins un paramètre de la mission réelle de l'aéronef à un instant donné ;
- faire le rapport entre la valeur déterminée du paramètre de la mission réelle et une valeur d'un paramètre équivalent à l'instant donné d'un profil de mission type certifié, et en déduire un coefficient de pondération ;
- pondérer avec le coefficient de pondération une valeur du débit de gaz d'inertage préconisé par le profil de mission type certifié pour la valeur du paramètre équivalent à l'instant donné, afin de déterminer un débit de gaz d'inertage à injecter adapté au besoin de la mission réelle à l'instant donné ;
- commander le système d'inertage pour injecter à l'instant donné le débit de gaz d'inertage déterminé.

De cette manière, le procédé de commande permet au système d'inertage d'injecter un débit de gaz d'inertage adapté au besoin de la mission réelle de l'aéronef à un instant donné. En effet, si la valeur du paramètre de la mission réelle est « n » fois plus petit que la valeur du paramètre équivalent du profil de mission type certifié, le système d'inertage injecte un débit « n » fois plus petit que celui préconisé par le profil de mission type certifié pour satisfaire à la réglementation en vigueur. Ainsi, étant donné que le besoin réel en gaz d'inertage est « n » fois inférieur, le système d'inertage satisfait toujours la réglementation en vigueur.

Les paramètres de la mission réelle et du profil de mission type certifié sont constitués, par exemple, par des taux de descente et/ou de montée et/ou l'altitude de l'aéronef, ou par un volume libre du réservoir de carburant.

En effet, en théorie le système d'inertage est dimensionné pour être capable de rendre inerte un réservoir de carburant en fonction d'un profil de mission type certifié de l'aéronef qui prévoit, entre autres, que l'aéronef, lors de sa mission, effectue une descente avec un taux de 2500 pieds par minute jusqu'à une altitude de 4000 pieds. Or, en pratique il est plutôt constaté un taux de descente aux alentours de 1250 pieds par minute. En d'autres termes, le système d'inertage bénéficie de deux fois plus de temps pour injecter du gaz d'inertage dans les réservoirs de carburant. L'invention permet, sur la base de la mesure de ce paramètre, d'injecter du gaz avec un débit deux fois plus petit que celui préconisé par le profil de mission type certifié et dicté par la réglementation en vigueur. En injectant deux fois moins de gaz d'inertage, la réglementation en vigueur est toujours satisfaite, et le gaz d'inertage est injecté en fonction du besoin réel en réalisant des économies par rapport à la préconisation du profil de mission type certifié.

Le même raisonnement peut être tenu avec le paramètre lié au volume libre du réservoir de carburant. En effet, la norme en vigueur et le profil de mission type certifié prévoient que l'aéronef embarque une quantité de carburant dans ses réservoirs suffisante pour qu'il atterrisse avec une quantité de carburant minimum prédéterminée, par exemple correspondant à une quantité dite de réserve. Cependant, ce n'est pas toujours le cas. En effet, certains aéronefs embarquent du carburant pour plusieurs missions, par exemple soit parce que le carburant est moins cher du lieu duquel il décolle de sorte qu'il s'avère moins cher de porter du carburant que d'en racheter à l'arrivée, soit parce que à l'arrivée le temps de remplissage des réservoirs nécessite une immobilisation trop importante de l'aéronef.

Ainsi, certains avions embarquent plus de carburant que nécessaire pour la mission à effectuer, de sorte que le volume libre du réservoir à rendre inerte est plus faible par rapport aux prévisions du profil de mission type certifié, de sorte que le débit d'inertage nécessaire est plus faible que celui préconisé. Par exemple, si à un instant donné le réservoir comprend plus de carburant que le prévoit le profil de mission type certifié, et que le volume libre à rendre inerte est deux fois plus petit que celui préconisé, le procédé selon l'invention permettra de diviser par deux le débit de gaz d'inertage préconisé pour injecter un débit adapté au besoin réel.

Les étapes du procédé sont réalisées à intervalles de temps réguliers, par exemple de quelques minutes, et de préférence environ toutes les minutes. Cette fréquence permet de réajuster en quasi temps réel le débit de gaz d'inertage au besoin réel, tout en n'étant pas influencé par la variation non linéaire des besoins en gaz d'inertage selon l'altitude de l'aéronef. En effet, étant donné que la pression atmosphérique varie d'une manière non linéaire en fonction de l'altitude, les besoins en gaz d'inertage ne sont pas linéaires sur toute la phase de descente ou de montée de l'aéronef.

L'invention fournit également un système d'inertage destiné à injecter un débit de gaz d'inertage dans au moins un réservoir de carburant d'un aéronef lors d'une mission réelle. Le système d'inertage est adapté pour la mise en œuvre du procédé de commande précité, et comprend au moins un générateur de gaz d'inertage alimenté en air comprimé et adapté pour réguler le débit de gaz d'inertage à injecter. Le système d'inertage est remarquable en ce qu'il comprend des moyens de détermination d'un paramètre de la mission réelle de l'aéronef à un instant donné, connectés à une unité de gestion. L'unité de gestion est programmée pour envoyer, à l'instant donné, une consigne de régulation de débit au générateur de gaz d'inertage. La consigne de régulation de débit correspond à une valeur d'un débit de gaz d'inertage préconisé par un profil de mission type certifié pour une valeur d'un paramètre équivalent du profil de mission type certifié à l'instant donné, pondéré par un coefficient correspondant au résultat d'un rapport entre la valeur du paramètre déterminé de la mission réelle et la valeur du paramètre équivalent du profil de mission type certifié.

### DESCRIPTION SOMMAIRE DES FIGURES

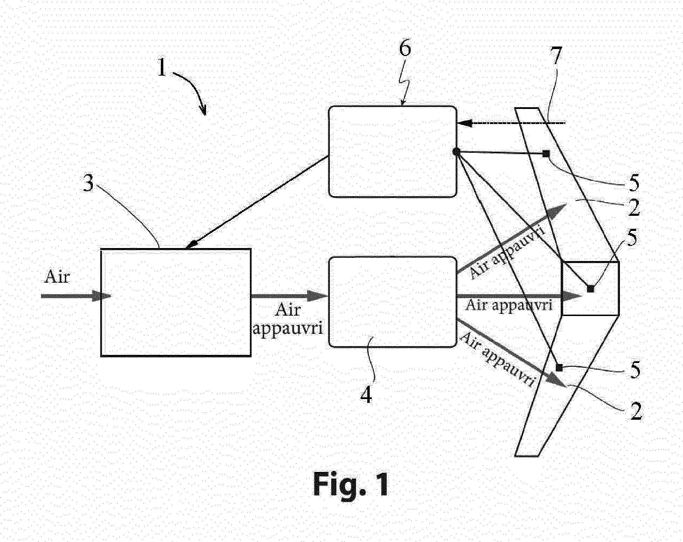

D'autres avantages et caractéristiques ressortiront mieux de la description qui va suivre, donnée à titre d'exemple non limitatif, du procédé de commande d'un système d'inertage d'un réservoir de carburant d'un aéronef selon l'invention, à partir de l'unique figure 1 illustrant de manière schématique un système d'inertage pour la mise en œuvre dudit procédé selon l'invention.

### DESCRIPTION DETAILLEE DE L'INVENTION

En référence à la figure 1, il est représenté un système d'inertage (1) destiné à injecter un débit de gaz d'inertage dans au moins un réservoir de carburant (2) d'un aéronef lors d'une mission réelle.

Le système d'inertage (1) comprend au moins un générateur (3) de gaz d'inertage alimenté en air comprimé et adapté pour réguler le débit de gaz d'inertage à injecter. Le générateur (3) de gaz d'inertage comporte une sortie d'air appauvri en oxygène assimilé au gaz d'inertage. Le générateur (3) de gaz d'inertage pourra consister dans tout générateur (3) de gaz d'inertage bien connu de l'homme du métier, tel qu'un générateur à membrane de séparation en polymère ou en zéolithe et/ou en une pile à combustible par exemple.

Le gaz d'inertage est ensuite acheminé vers des moyens de distribution (4) du gaz d'inertage pour l'injection en tant que tel dans le ou les réservoirs (2) de carburant de l'aéronef. Les moyens de distribution (4) sont bien connus et sont constitués par des conduites de distribution et des valves. L'injection dans le réservoir est, par exemple, réalisée par des buses d'injection.

Ainsi, le système d'inertage (1) permet de générer et d'injecter un gaz d'inertage dans le ou les réservoirs (2) de carburant de l'aéronef pour des raisons de sécurité afin de réduire le risque d'explosion desdits réservoirs (2). Le gaz d'inertage injecté vise à rendre inerte le ou les réservoirs (2) de carburant, c'est-à-dire qu'il permet de réduire le taux d'oxygène présent dans le ou lesdits réservoirs (2), et notamment de maintenir ce taux sous un certain seuil, par exemple inférieur à 12%.

Par ailleurs, le système d'inertage (1) comprend des moyens de détermination (5, 7) d'un paramètre de la mission réelle de l'aéronef, connectés à une unité de gestion (6). Les paramètres déterminés sont constitués, par exemple, par des taux de montée et/ou de descente et/ou l'altitude de l'aéronef, et/ou par un volume libre du réservoir de carburant à rendre inerte. Les moyens de détermination (5, 7) peuvent être de tout type. Il peut s'agir d'un variomètre (7) ou d'un baromètre pour mesurer la variation de la pression atmosphérique et déterminer le taux de descente ou de montée ou l'altitude de l'aéronef, et/ou d'un système de jaugeage de carburant (5) disposé dans le réservoir pour indiquer le volume de carburant, et déterminer indirectement le volume libre du réservoir à rendre inerte. Les paramètres de la mission réelle sont déterminés, à intervalles de temps réguliers, par exemple de l'ordre de quelques minutes, et de préférence environ toutes les minutes.

En fonction des paramètres déterminés de la mission réelle, l'unité de gestion (6) est programmée pour envoyer, par exemple toutes les minutes, une consigne de régulation de débit au générateur de gaz d'inertage (3) adapté au besoin réel en gaz d'inertage du réservoir.

Pour ce faire, l'unité de gestion (6) est connectée au générateur de gaz d'inertage (3) et comprend une base de données dans laquelle un profil de mission type certifié est enregistré. Ce profil de mission type certifié correspond au profil de mission, c'est-à-dire au vol type, réalisé le plus fréquemment par l'aéronef. Le profil de mission type certifié indique des paramètres du type : volume libre du réservoir de carburant, ou indirectement quantité de carburant dans les réservoirs ; durée de vol ; altitude ; durée et taux de la phase de montée ; durée de la phase de croisière ; durée et taux de la phase de descente ; vitesse de l'aéronef, etc...

Selon la réglementation en vigueur, le profil de mission type certifié préconise un débit de gaz d'inertage à respecter en fonction des paramètres de la mission type. La base de données de l'unité de gestion (6) comprend, par exemple, un tableau et/ou des équations indiquant le débit de gaz d'inertage en fonction de l'altitude, du temps de vol et de la phase de la mission. En pratique, ce tableau de débit du profil de mission type est élaboré, par analyse, pendant la phase de développement du système d'inertage (1). Le profil de mission type certifié comprend volontairement des paramètres plus contraignants que ceux de la mission réelle effectuée, de sorte que le débit de gaz d'inertage préconisé par le profil de mission type certifié permettra toujours de satisfaire la réglementation en vigueur. Par exemple, le profil de mission type certifié prévoit que l'aéronef embarque une quantité de carburant faible, lui permettant d'atterrir uniquement avec une quantité minimum de carburant prédéterminée, par exemple correspondant à une quantité dite de réserve. De plus, les taux de montée et de descente prévus par la mission type sont bien trop élevés par rapport à la réalité, et sont de l'ordre de 2500 pieds par minute.

L'unité de gestion (6) comprend des moyens de calcul programmés pour faire un rapport entre la valeur de l'un des paramètres déterminés de la mission réelle à un instant donné et la valeur d'un paramètre équivalent enregistré du profil de mission type certifié à l'instant donné, afin d'en déduire un coefficient de pondération.

Les moyens de calcul de l'unité de gestion (6) pondèrent ensuite la valeur du débit de gaz d'inertage préconisé par le profil de mission type certifié pour le paramètre équivalent du profil de mission type certifié à l'instant donné, avec le coefficient de pondération, pour en déduire un débit de gaz d'inertage adapté au besoin réel à l'instant donné.

A l'instant donné, l'unité de gestion (6) envoie au générateur de gaz d'inertage (3), une consigne de régulation de débit de gaz d'inertage adapté au besoin réel.

Ces opérations sont effectuées à intervalles de temps réguliers, par exemple de quelques minutes, et de préférence environ toutes les minutes.

Ainsi, régulièrement, l'unité de gestion (6), qui se présente par exemple sous la forme d'un contrôleur comprenant un logiciel, compare un ou plusieurs paramètres de la mission réelle avec ceux du profil de mission type certifié, et ajuste le débit de gaz d'inertage en conséquence.

Par exemple, si la comparaison du paramètre lié au taux de descente indique que l'aéronef descend deux fois moins vite que ce qui est prévu dans le profil de mission type certifié, l'unité de gestion (6) commande le générateur de gaz d'inertage (3) pour qu'il génère un débit deux fois plus petit en valeur à ce qui était préconisé par le profil de mission type. En effet, si l'aéronef descend deux fois moins vite, le système d'inertage (1) dispose de deux fois plus de temps pour rendre inerte le réservoir (2), de sorte que s'il injecte du gaz avec un débit deux fois plus petit, la réglementation en vigueur sera toujours satisfaite, tout en réalisant des économies d'énergie, et indirectement de carburant. En effet, en suivant le profil de mission type certifié, le générateur aurait envoyé 100% du débit de gaz d'inertage pendant toute la durée de la descente au lieu de 50% du débit selon la présente invention.

Il en est de même pour la comparaison du paramètre lié au volume libre du réservoir (2) à rendre inerte. En effet, si le volume libre du réservoir (2) est deux fois plus petit que le volume libre prévu par la mission type, l'unité de gestion (6) commandera le générateur de gaz d'inertage (3) pour envoyer un débit deux fois plus petit que celui préconisé.

Bien entendu, plusieurs paramètres peuvent être comparés en même temps. En effet, si par rapport à la mission type enregistrée, l'aéronef descend deux fois moins vite et que le volume libre dans le réservoir de carburant (2) est deux fois plus petit, le débit de gaz d'inertage est divisé par quatre par rapport au débit de gaz d'inertage préconisé. Les coefficients de pondération déterminés sont multipliés entre eux.

## Revendications

1. Procédé de commande d'un système d'inertage (1) conçu pour injecter, lors d'une mission réelle d'un aéronef, un débit de gaz d'inertage dans au moins un réservoir de carburant (2) dudit aéronef, le procédé consiste à réaliser les étapes consistant à :
- déterminer une valeur d'au moins un paramètre de la mission réelle de l'aéronef à un instant donné et **caractérisé en ce que** les étapes consistent en
- faire le rapport entre la valeur déterminée du paramètre de la mission réelle et une valeur d'un paramètre équivalent à l'instant donné d'un profil de mission type certifié, et en déduire un coefficient de pondération ;
- pondérer avec le coefficient de pondération une valeur du débit de gaz d'inertage préconisé par le profil de mission type certifié pour la valeur du paramètre équivalent à l'instant donné, afin de déterminer un débit de gaz d'inertage à injecter adapté au besoin de la mission réelle à l'instant donné ;
- commander le système d'inertage pour injecter à l'instant donné le débit de gaz d'inertage déterminé.

2. Procédé selon la revendication 1, *caractérisé* en cc que les paramètres de la mission réelle et du profil de mission type certifié sont constitués par des taux de descente et/ou de montée et/ ou une altitude de l'aéronef.

3. Procédé selon l'une des revendications 1 à 2, ***caractérisé* en ce que** les paramètres de la mission réelle et du profil de mission type certifié sont constitués par un volume libre du réservoir de carburant (2).

4. Procédé selon la revendication 1, ***caractérisé* en ce que** les étapes sont réalisées à intervalles de temps réguliers.

5. Système d'inertage (1) destiné à injecter un débit de gaz d'inertage dans au moins un réservoir de carburant (2) d'un aéronef lors d'une mission réelle, ledit système (1) comprend au moins un générateur de gaz d'inertage (3) alimenté en air comprimé et adapté pour réguler le débit de gaz d'inertage à injecter, le système d'inertage (1) et des moyens de détermination (5, 7) d'un paramètre de la mission réelle de l'aéronef à un instant donné, connectés à une unité de gestion (6), l'unité de gestion (6) étant programmée pour envoyer à l'instant donné une consigne de régulation de débit au générateur de gaz d'inertage (3), ***caractérise* en ce que** la consigne de régulation de débit correspond à une valeur d'un débit de gaz d'inertage préconisé par un profil de mission type certifié pour une valeur d'un paramètre équivalent du profil de mission type certifié à l'instant donné, pondéré par un coefficient correspondant au résultat d'un rapport entre la valeur du paramètre déterminé de la mission réelle et la valeur du paramètre équivalent du profil de mission type certifié.

6. Système d'inertage (1) selon la revendication 5, ***caractérisé* en ce que** les paramètres de la mission réelle et du profil de mission type certifié sont constitués par des taux de descente et/ou de montée et/ou une altitude de l'aéronef.

7. Système d'inertage selon l'une des revendications 5 à 6, ***caractérisé* en ce que** les paramètres de la mission réelle et du profil de mission type certifié sont constitués par un volume libre du réservoir de carburant (2).

## Patentansprüche

1. Verfahren zur Steuerung eines Inertisierungssystems (1), das ausgestaltet ist, bei einer realen Mission eines Luftfahrzeugs einen Inertisierungsgasdurchfluss in wenigstens einen Kraftstofftank (2) des Luftfahrzeugs einzuspritzen, wobei das Verfahren darin besteht, folgende Schritte auszuführen:
- Bestimmen eines Werts wenigstens eines Parameters der realen Mission des Luftfahrzeugs zu einem gegebenen Zeitpunkt, und **dadurch gekennzeichnet, dass** die Schritte in Folgendem bestehen:
- Herstellen des Verhältnisses zwischen dem bestimmten Wert des Parameters der realen Mission und einem Wert eines äquivalenten Parameters zum gegebenen Zeitpunkt eines Missionsprofils zertifizierten Typs und Ableiten eines Gewichtungskoeffizienten davon;
- Gewichten, mit dem Gewichtungskoeffizienten, eines Werts des Inertisierungsgasdurchflusses, der vom Missionsprofil zertifizierten Typs für den Wert des äquivalenten Parameters zum gegebenen Zeitpunkt empfohlen wird, um einen einzuspritzenden Inertisierungsgasdurchfluss zu bestimmen, der an den Bedarf der realen Mission zum gegebenen Zeitpunkt angepasst ist;
- Steuern des Inertisierungssystems, um zum gegebenen Zeitpunkt den bestimmten Inertisierungsgasdurchfluss einzuspritzen.

2. Verfahren nach Anspruch 1, **dadurch *gekennzeichnet,* dass** die Parameter der realen Mission und des Missionsprofils zertifizierten Typs von Sinkraten und/oder Steigraten und/oder einer Höhe des Luftfahrzeugs gebildet werden.

3. Verfahren nach einem der Ansprüche 1 bis 2, **dadurch *gekennzeichnet,* dass** die Parameter der realen Mission und des Missionsprofils zertifizierten Typs von einem freien Volumen des Kraftstofftanks (2) gebildet werden.

4. Verfahren nach Anspruch 1, **dadurch *gekennzeichnet,* dass** die Schritte in regelmäßigen Zeitintervallen ausgeführt werden.

5. Inertisierungssystem (1), das dazu bestimmt ist, einen Inertisierungsgasdurchfluss in wenigstens einen Kraftstofftank (2) des Luftfahrzeugs bei einer realen Mission einzuspritzen, wobei das System (1) wenigstens einen Inertisierungsgasgenerator (3) umfasst, der mit Druckluft versorgt wird und angepasst ist, um den einzuspritzenden Inertisierungsgasdurchfluss zu regeln, wobei das Inertisierungssystem (1) und Mittel zur Bestimmung (5, 7) eines Parameters der realen Mission des Luftfahrzeugs zu einem gegebenen Zeitpunkt mit einer Verwaltungseinheit (6) verbunden sind, wobei die Verwaltungseinheit (6) programmiert ist, um zum gegebenen Zeitpunkt einen Sollwert zur Durchflussregelung an den Inertisierungsgasgenerator (3) zu senden, **dadurch *gekennzeichnet,* dass** der Sollwert zur Durchflussregelung einem Wert eines Inertisierungsgasdurchflusses entspricht, der von einem Missionsprofil zertifizierten Typs für einen Wert eines äquivalenten Parameters des Missionsprofils zertifizierten Typs zum gegebenen Zeitpunkt empfohlen wird, gewichtet durch einen Koeffizienten, der dem Ergebnis eines Verhältnisses zwischen dem Wert des bestimmten Parameters der realen Mission und dem Wert des äquivalenten Parameters des Missionsprofils zertifizierten Typs entspricht.

6. Inertisierungssystem (1) nach Anspruch 5, **dadurch *gekennzeichnet,* dass** die Parameter der realen Mission und des Missionsprofils zertifizierten Typs von Sinkraten und/oder Steigraten und/oder einer Höhe des Luftfahrzeugs gebildet werden.

7. Inertisierungssystem nach einem der Ansprüche 5 bis 6, **dadurch *gekennzeichnet,* dass** die Parameter der realen Mission und des Missionsprofils zertifizierten Typs von einem freien Volumen des Kraftstofftanks (2) gebildet werden.

## Claims

1. Method for controlling an inerting system (1) designed to inject, during an actual mission of an aircraft, a flow of inerting gas into at least one fuel tank (2) of said aircraft, the method consisting in carrying out the steps of:
- determining a value of at least one parameter of the actual mission of the aircraft at a given time and **characterised by** the steps of
- establishing the relation between the determined value of the parameter of the actual mission and a value of an equivalent parameter at the given time of a certified standard mission profile, and deriving therefrom a weighting coefficient;
- weighting with the weighting coefficient a value of the flow of inerting gas prescribed by the certified standard mission profile for the value of the equivalent parameter at the given time, in order to determine a flow of inerting gas to be injected adapted to the need of the actual mission at the given time;
- controlling the inerting system to inject at the given time the determined flow of inerting gas.

2. Method according to claim 1, ***characterised* in that** the parameters of the actual mission and of the certified standard mission profile consist of rates of descent and/or ascent and/or an altitude of the aircraft.

3. Method according to one of claims 1 or 2, ***characterised* in that** the parameters of the actual mission and of the certified standard mission profile consist of a free volume of the fuel tank (2).

4. Method according to claim 1, ***characterised* in that** the steps are performed at regular time intervals.

5. Inerting system (1) designed to inject a flow of inerting gas into at least one fuel tank (2) of an aircraft during an actual mission, said system (1) comprises at least one inerting gas generator (3) supplied with compressed air and adapted to regulate the flow of inerting gas to be injected, the inerting system (1) and determination means (5, 7) of a parameter of the actual mission of the aircraft at a given time, connected to a management unit (6), the management unit (6) being programmed to send at the given time a flow regulation setpoint to the inerting gas generator (3), ***characterised* in that** the flow regulation setpoint corresponds to a value of a flow of inerting gas prescribed by a certified standard mission profile for a value of an equivalent parameter of the certified standard mission profile at the given time, weighted by a coefficient corresponding to the result of a relation between the value of the determined parameter of the actual mission and the value of the equivalent parameter of the certified standard mission profile.

6. Inerting system (1) according to claim 5, ***characterised* in that** the parameters of the actual mission and of the certified standard mission profile consist of rates of descent and/or ascent and/or an altitude of the aircraft.

7. Inerting system according to one of claims 5 or 6, **characterised in that** the parameters of the actual mission and of the certified standard mission profile consist of a free volume of the fuel tank (2).
